# EUROPEAN PATENT SPECIFICATION

(11) **EP 1 695 875 B1**
(45) Date of publication and mention of the grant of the patent: **08.04.2015**
(21) Application number: 06003707.4
(22) Date of filing: 23.02.2006
(51) Int. Cl.: B60R 21/0136

(54) **Starting device of passenger protection apparatus**
Startvorrichtung für eine Insassenschutzvorrichtung
Dispositif de démarrage pour appareil de protection d'un passager

(30) Priority: 25.02.2005 JP 2005050563
(43) Date of publication of application: 30.08.2006
(73) Proprietor: DENSO CORPORATION, Kariya-city, Aichi-pref., 448-8661 (JP)
(72) Inventor: Hashimoto, Kazuhisa c/o Denso Corporation, Kariya-city Aichi-pref. 448-8661 (JP); Ide, Seiya c/o Denso Corporation, Kariya-city Aichi-pref. 448-8661 (JP)
(74) Representative: Kuhnen & Wacker

(56) References cited:
- EP-A- 1 114 757
- DE-A1- 10 244 730
- DE-A1- 19 532 620
- DE-A1- 19 602 990
- US-A1- 2004 099 462

## Description

The present invention relates to a starting device for starting a passenger protection apparatus such as an air bag.

In recent years, vehicles having side air bags for protecting passengers from side collisions have increased. In the case of side collision, a distance between a passenger and a collision object is shorter than that in a case of a frontal collision. Therefore, the side air bag is required to have a quicker response than a front air bag. Further, the starting device for the side air bag is required to detect the collision in a wide area such as in a whole area of a door panel.

For example, USP 5,748, 075 (JP-B2-2654428) discloses a control assembly for a passenger protection system. In the control assembly, an air pressure sensor detects a pressure change inside of an enclosed body that is provided in a door of a vehicle as a detection medium, thereby to detect a side collision. A control unit evaluates a sudden air pressure rise detected by the sensor when the enclosed body is compressed by the side collision. Furthermore, prior art document US 2004/099462 A1 discloses a device for detecting a deformation of a component, in particular in the automotive industry, having a deformable hollow body arrangement assigned as a deformation indicator to component and having at least one orifice area, and at least one sensor device situated in the particular orifice area for measuring an air flow corresponding to the deformation of hollow body arrangement. In addition, the present invention relates to a method of detecting such a deformation of a component and activating an appropriate safety application, the measured data being analyzed by an analyzer unit after measurement of the deformation, and a suitable safety application optionally being activated if the measured data of the at least one sensor device indicates a deformation of hollow body arrangement and thus of component.

In the above system, the enclosed body is housed in the inside of the door panel. However, in the inside of the door panel, many components such as a window, which moves up and down, a window regulator, a key lock motor, and an impact beam, are housed. Therefore, it is difficult to fully seal an entire space inside of the door panel except such components to form the enclosed body. With this, it is difficult to detect the collision in the wide area of the door panel.

Even in a case that a plurality of enclosed small bodies is provided in the door as detection media for partly detecting a collision with each enclosed small body, it is difficult to reduce manufacturing costs for producing the enclosed bodies having durability against an inside condition change of each body due to a slight impact and a long time use.

The present invention is made in view of the foregoing matter, and it is an object of the present invention to provide a starting device of a passenger protection apparatus capable of detecting a collision in a wide area and having flexibility against a change of an inside condition of a detection medium.

The object of the invention is attained by a starting device according to claim 1. Further developments of the invention are specified in the dependent claims.

Because the hollow body, which communicates with the outside space through the current speed measuring means, is used as the detection medium instead of an enclosed body, it is effective to reduce manufacturing costs. Further, there are plural hollow spaces in a vehicle, and such hollow spaces can be used as the hollow body 11. Accordingly, it is possible to detect a collision over a wide area in the vehicle.

Further, since the hollow body communicates with the space outside of the hollow body, even if the hollow body had damage due to slight impact, the collision can be detected. Accordingly, the starting device is flexible to the change of the inside condition of the hollow body.

Other objects, features and advantages of the present invention will become more apparent from the following detailed description made with reference to the accompanying drawings, in which like parts are designated by like reference numbers and in which:
Fig. 1A is a schematic view of a vehicle for showing an arrangement of a starting device and a side air bag as a passenger protection apparatus according to a first comparative example;
Fig. 1B is a block diagram of the starting device of the passenger protection apparatus according to the first comparative example;
Figs. 2A and 2B are cross-sectional views of a door providing a hollow body of the starting device according to the first comparative example;
Figs 3A to 3C are explanatory views for showing a flow of operation of the starting device according to the first comparative example;
Figs. 4A to 4E are explanatory views for showing a flow of operation of the starting device, in which a door had a damage, according to the first comparative example;
Fig. 5 is a block diagram of a starting device of a passenger protection apparatus having a G sensor according to a second comparative example;
Fig. 6A is a top view of a front part of a vehicle with a starting device of a passenger protection apparatus, partly including a block diagram, according to a third comparative example;
Fig. 6B is a side view of the front part of the vehicle with the starting device, partly including a block diagram, according to the third comparative example;
Figs. 7A and 7B are cross-sectional views of a door with an impact beam providing a hollow body of a starting device of a passenger protection apparatus according to a fourth comparative example; and
Figs. 8A and 8B are cross-sectional views of a door defining plural cavities for a hollow body of a starting device of a passenger protection apparatus according to the embodiment of the invention.

It is to be noted that the first to fourth comparative examples are as such not part of the claimed invention but serve for a better understanding thereof.

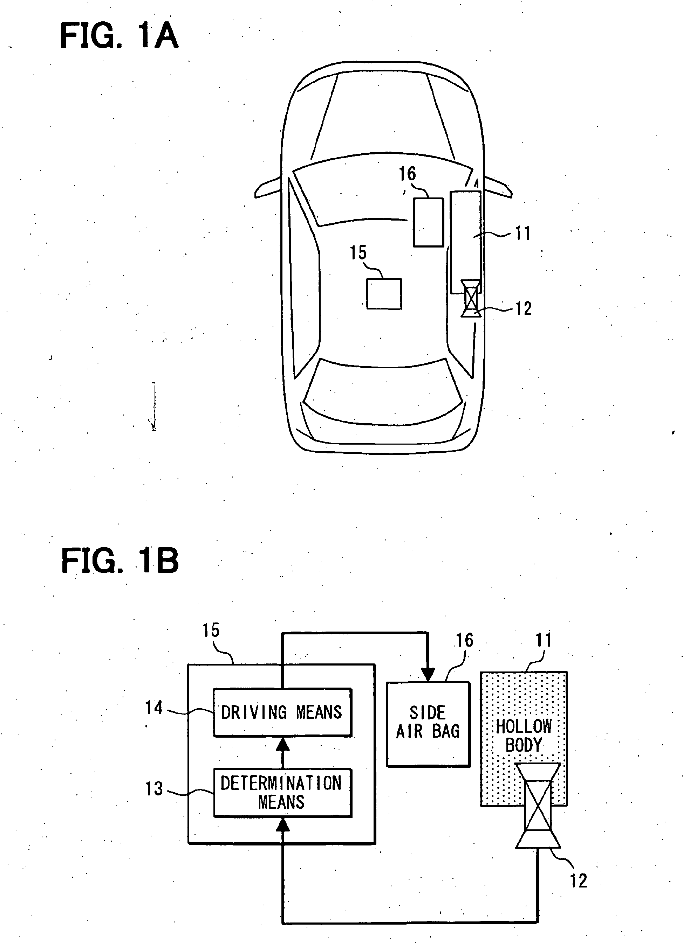

A first comparative example will be now described with reference to Figs 1A through 4E. As shown in Figs. 1A and 1B, a starting device of a passenger protection apparatus has a hollow body 11 defining a cavity therein, a current speed measuring means, a determination means 13 and a driving means 14. In the first comparative example, the starting device is for example applied to start a side air bag 16 as the passenger protection apparatus.

The determination means 13 and the driving means 14 are provided by programs stored in an air bag ECU 15. The current speed measuring means includes a thermal current meter 12. The air bag ECU 15 is located at the center of a vehicle floor. An output of the air bag ECU 15 is input to the side air bag 16. The side air bag 16 is housed adjacent to a side support of a seat (not shown).

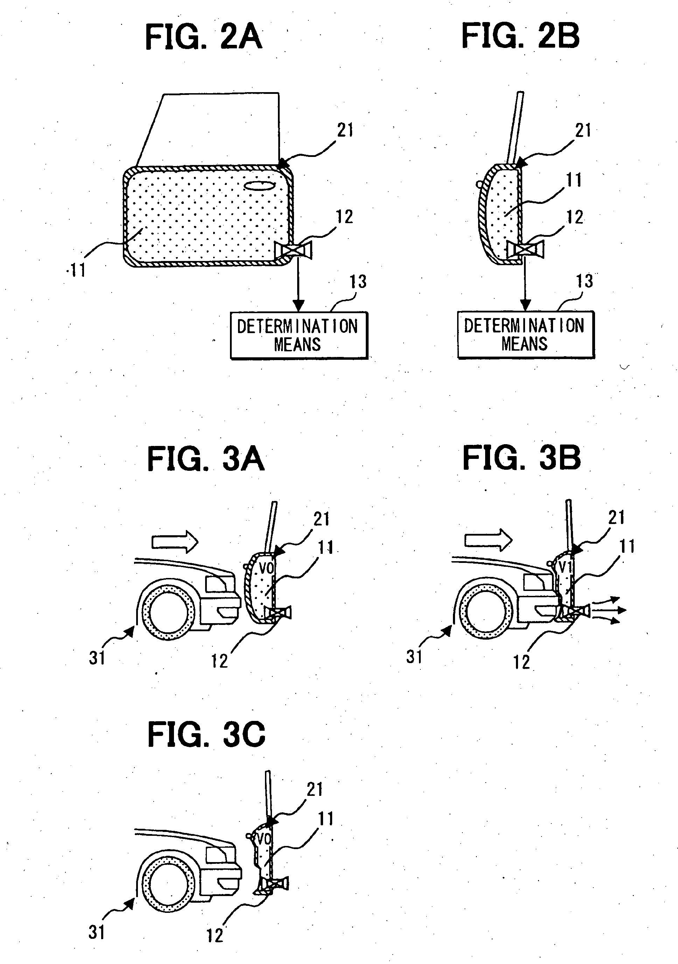

An arrangement of the hollow body 11 and the thermal current meter 12 will be described with reference to Figs. 2A and 2B. In a cavity inside of a door 21 of the vehicle, components such as a window regulator and a key lock motor are generally accommodated. In the first comparative example, the cavity inside the door 21 is used as the cavity of the hollow body 11. Generally, the cavity is covered with a service hole cover for restricting entry of foreign materials such as raindrops. Although the cavity is not air-tightly sealed, little air flows in and out the cavity.

The thermal current meter 12 is disposed to allow the cavity of the hollow body 11 to communicate with a space outside of the hollow body 11. In the first comparative example, the hollow body 11 communicates with a space inside of the vehicle. The thermal current meter 12 measures a current speed of a fluid passing therethrough and normally maintains a pressure inside of the hollow body 11 equal to a pressure (atmospheric pressure) inside of the vehicle. In the hollow body 11, air exists as the fluid. Thus, the thermal current meter 12 measures the current speed of the air.

When the door 21 is depressed such as due to a side collision, the air inside of the hollow body 11 is discharged to the inside of the vehicle through the thermal current meter 12. At this time, the current speed of the air is measured by the thermal current meter 12. The measured current speed is sent to the determination means 13. Further, since the air is discharged to the inside of the vehicle through the thermal current meter 12, the pressure inside of the hollow body 11 and the pressure inside of the vehicle return to the pressure before the collision, i.e., return to the atmospheric pressure when time elapses.

Next, operation of the air bag ECU 15 including the determination means 13 and the driving means 14 will be described. The determination means 13 determines a degree of impact based on the current speed measured by the thermal current meter 12. Also, the determination means 13 determines whether it is necessary to expand the side air bag 16. Further, when it is necessary to expand the side air bag 16, the determination means 13 determines an expansion mode of the side air bag 16.

If the current speed is large, a heavy side collision will be expected. Thus, the determination means 13 outputs a collision determination result to the driving means 14. To expand the side air bag 16 with different modes according to the measured current speed, that is, a collision speed, the collision determination result includes information about the expansion mode of the side air bag 16.

On the contrary, when the current speed is low, the determination means 13 determines that the collision is not so heavy as to expand the side air bag 16. Therefore, the determination means 13 does not output the collision determination result to the driving means 14.

The driving means 14 outputs an expansion instruction to the side air bag 16 when received the collision determination result from the determination means 13. Accordingly, the side air bag 16 is expanded in an appropriate mode, at an appropriate timing.

With reference to Figs. 3A to 3C, operation of the thermal current meter 12 when the vehicle is collided with another vehicle 31 from the side will be described. Here, the pressure inside of the vehicle is equal to the atmospheric pressure. Fig. 3A shows a condition before the collision. Also, a pressure V0 of the hollow body 11 is equal to the atmospheric pressure.

Next, as shown in Fig. 3B, when the another vehicle 31 crashes into the vehicle and the hollow body 11 is crushed, the pressure inside of the hollow body 11 momentarily increases to a pressure V1. At this time, a differential pressure is created between the inside pressure of the hollow body 11 and the atmospheric pressure. With this, the air for a volume of the crushed part is discharged to the inside of the vehicle through the thermal current meter 12. The thermal current meter 12 measures the current speed of the air discharging from the hollow body 11.

After the collision, the increased inside pressure V1 of the hollow body 11 returns to the atmospheric pressure V0, as shown in Fig. 3C. Since the current speed of the fluid, which is moved by the crush of the hollow body 11, that is, the crush of the door 21, is used to detect the collision, it is possible to detect a collision at any positions in the door 21.

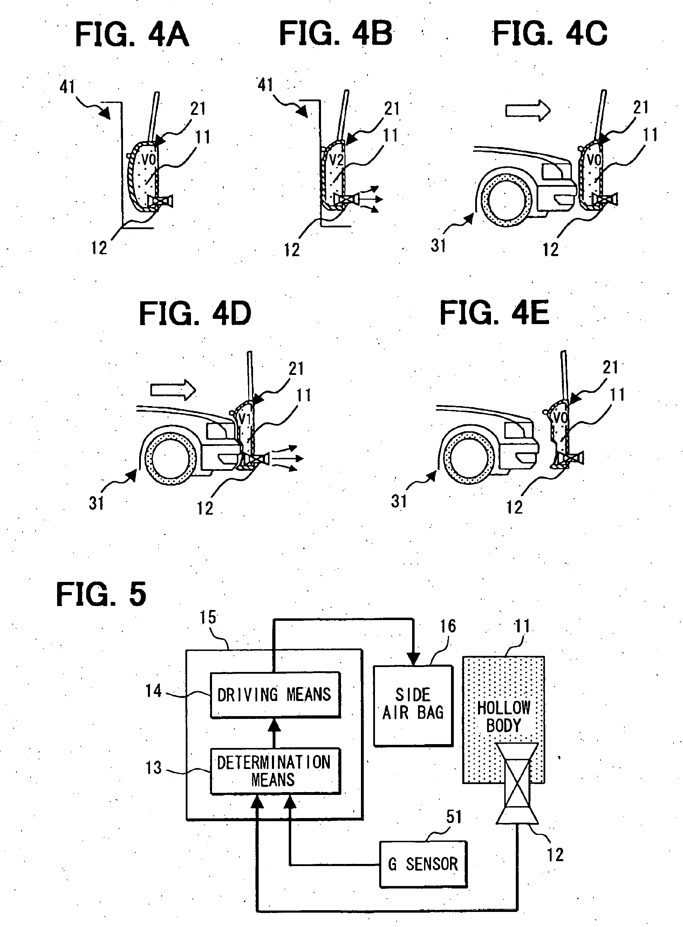

Next, operation when the another vehicle 31 collides into the door 21 that had been damaged by a slight impact will be described. First, a driver erroneously collides a side of the vehicle against a wall 41 at low speed, as shown in Figs. 4A and 4B. In this case, since the collision is made at low speed, the current speed of the air discharging from the hollow body 11 is slow. Therefore, the determination means 13 does not send the collision determination result to the driving means 14. Accordingly, the side air bag 16 is not expanded. Also, at the timing of collision, the pressure inside of the hollow body 11 increases to a pressure V2.

Next, operation when the crushed door 21 is further collided by the vehicle 31 will be described with reference to Figs. 4C to 4E. As shown in Fig. 4C, the pressure inside of the hollow body 11 is equal to the atmospheric pressure V0 because the time has elapsed since the last collision shown in Fig. 4B. As shown in Fig. 4D, when the vehicle is collided with the another vehicle 31, the hollow body 11 is further crushed and the pressure inside of the hollow body 11 is momentarily increased to the pressure V1.

At the same time, since the differential pressure is generated between the pressure inside of the hollow body 11 and the atmospheric pressure, the air for the volume of the crushed part of the hollow body 11 is discharged to the inside of the vehicle through the thermal current meter 12. The thermal current meter 12 measures the current speed of the air discharging from the hollow body 11.

In the case of Fig. 4D, since the vehicle is heavily collided by the counterpart vehicle 31, the current speed measured by the thermal current meter 12 is high. Thus, the determination means 13 determines that it is necessary to expand the side air bag 16. After the collision, as shown in Fig. 4E, the increased pressure V1 inside the hollow body 11 returns to the atmospheric pressure V0 with the elapse of time, similar to Fig. 3C and Fig. 4C.

The starting device of the passenger protection apparatus of the first comparative example uses the whole cavity inside the door 21 as the hollow body 11 for a detection medium. Therefore, it is possible to detect a collision in a wide area over the door 21. Also, the cavity of the hollow body 11 communicates with the inside of the vehicle through the thermal current meter 12. Therefore, even if the hollow body 11 has a slight depression by an impact, it is possible to further detect a heavy collision unless the hollow body 11 had been fully crushed. Accordingly, the device has flexibility to the change of an inside condition of the detection medium.

A second comparative example will be described with reference to Fig. 5. In the second comparative example, the starting device has a G sensor 51 in addition to the structure of the first comparative example. Structural parts of the second comparative example similar to those of the first comparative example will be denoted with like reference numerals and descriptions of those parts will not be repeated.

The G sensor 51 is located at an inner side of the door 21. The G sensor 51 detects an acceleration in a lateral direction of the vehicle, and sends a detected value to the determination means 13. As shown in Fig. 5, the determination means 13 determines a degree of impact and whether it is necessary to expand the side air bag 16, based on the results output from the G sensor 51 and the thermal current meter 12.

Accordingly, since the G sensor 51 is added, the determination means 13 can determine the expansion of the aide air bag 16 based on the results output from the plural sensors. Thus, determination accuracy further improves.

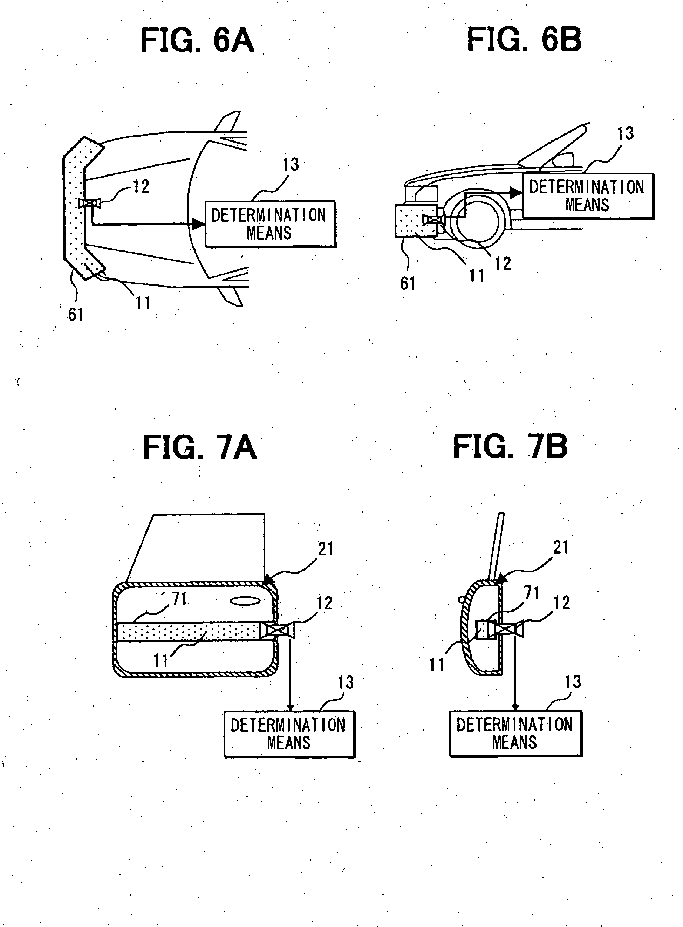

A third comparative example will be described with reference to Figs. 6A and 6B. In the first and second comparative examples, the cavity inside of the door 21 is used as the cavity of the hollow body 11. However, in the third comparative example, the hollow body 11 is arranged in a bumper 61. Here, structural parts similar to those of the above-described comparative examples will be denoted with like reference numerals and description of those parts will not be repeated.

The hollow body 11, which is arranged inside of the bumper 61 communicates with a space outside of the hollow body 11 through the thermal current meter 12. The hollow body 11 and the space outside of the hollow body 11 have a pressure equal to the atmospheric pressure. The bumper 61 generally widely covers front portions of a right and left fenders in addition to a front portion of the vehicle. Therefore, a wide area is used as the hollow body 11. Accordingly, in the third comparative example, collisions can be detected in a wide area throughout the bumper 61.

For example, a collision from a diagonally forward side can be detected in addition to a collision from a front side. Also, since the hollow body 11 communicates with the space outside of the hollow body 11, a heavy collision can be detected even if the hollow body 11 had been slightly depressed by impacts more than once. Namely, similar to the first and second comparative examples, the device has flexibility to the change of condition inside the detection medium.

A fourth comparative example will be described with reference to Figs. 7A and 7B. A structural difference of the fourth comparative example from the above-described comparative examples is that the hollow body 11 is arranged in an impact beam 71 that is located inside of the door 21. Here, structural parts similar to those of the above-described comparative examples will be denoted with like reference numerals and descriptions of those parts will not be repeated.

The hollow body 11, which uses a space inside of the impact beam 71, communicates with a space outside of the hollow body 11 through the thermal current meter 12. The hollow body 11 and the space outside of the hollow body 11 have a pressure equal to the atmospheric pressure. Generally, the impact beam 71 is a metallic tubular member. If one opening of the tubular member is closed, a port through which air flows in and out is limited to an opposite opening.

When a cavity inside of the impact beam 71 having a closed end on one side is used as the cavity for the hollow body 11, a position through which air is discharged at the time of the collision is more concentrated to the thermal current meter 12, as compared to the case entirely using the cavity of the door 21 as the hollow body 11. Accordingly, in addition to the effects similar to those of the first comparative example, it is possible to determine the expansion of the side air bag 16 with further improved accuracy.

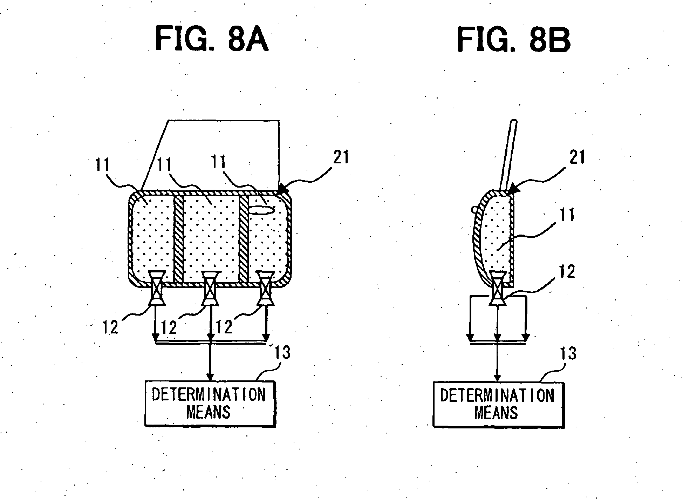

The embodiment of the invention will be described with reference to Fig. 8. A structural difference of the embodiment of the invention from the first comparative example is that the cavity inside of the door 21 is divided into three cavities and a plurality of thermal current meters 12 are provided for each of the cavities 11. Here, structural parts similar to the above-described comparative example will be denoted with like reference numerals and description of those parts will not be repeated.

In the embodiment of the invention, each of the hollow bodies 11 has the thermal current meter 12 for communicating the space inside the hollow body 11 with the outside space. Therefore, when the vehicle receives an impact, the part having the largest current speed in the three measured values of the thermal current meters 12 is a part that had the largest impact.

Accordingly, in addition to the effects similar to those of the first comparative example, it is possible to specify the position of the collision. Therefore, it is possible to expand the air bag at a necessary position. Here, the number of the hollow bodies 11 is not limited to three.

In the above-described comparative examples and the embodiment of the invention, the fluid inside of the hollow body 11 is air. However, gas other than the air can be used as the fluid. Further, the hollow body, which is filled with another material, e.g., liquid or gel, having high viscosity and easily deformable, can be used.

In the above-described comparative examples and the embodiment of the invention, the starting device is exemplary applied to expand the side air bags 16. However, the air bag receiving the expansion instruction is not limited to the side air bags 16. For example, the expansion instruction can be sent to front air bags and knee air bags.

In the above-described comparative examples and the embodiment of the invention, the hollow body 11 of the device is exemplary arranged in the door 21 and the bumper 61. However, the mounting position of the hollow body 11 is not limited to the above. For example, a space between a roof of the vehicle and a passenger compartment can be used as the hollow body 11. In this case, the air bag can be expanded when the roof, that is, the hollow body 11, is crushed by rollover. Also, the hollow body 11 can be arranged at plural positions, for example, in both the impact beam 71 and the bumper 61. Thus, the collision can be detected in a further wide area.

In the above-described comparative examples, the thermal current meter 12 is used as the current speed measuring means. However, the current speed measuring means is not limited to the thermal current meter 12. For example, a fluid oscillation flow meter (swirl, fluidics), a Coriolis flow meter, an ultrasonic flow meter (propagation delay time method, Doppler method), a laser flow meter, a differential pressure flow meter (orifice, nozzle, Venturi tube), an electromagnetic flow meter can be used as the current speed measuring means.

Also in the third, fourth comparative examples and the embodiment of the invention, the G sensor 51 can be provided, in a manner similar to the second comparative example. In the embodiment of the invention, the hollow body 11 is not limited to the door 21. For example, the cavity inside of the bumper 61 can be divided into plural cavities and plural thermal current meters 12 can be provided for each of the cavities.

## Claims

1. A starting device of a passenger protection apparatus for a vehicle, comprising:
a hollow body (11) defining a plurality of cavities in which a fluid exists;
a plurality of current speed measuring means (12), wherein each of the plurality of cavities has a current speed measuring means (12) disposed to allow that cavity of the hollow body (11) to communicate with a space outside of the hollow body (11), each current speed measuring means (12) measuring a current speed of the fluid when a differential pressure occurs between the corresponding cavity of the hollow body (11) and the space outside of the hollow body (11); and
a determination means (13) for determining a collision based on the current speeds
measured by the plurality of current speed measuring means (12) and specifying a position of the collision based on the measured current speeds.

2. The starting device according to claim 1, wherein the hollow body (11) is a door (21) of the vehicle, and the plurality of cavities of the hollow body (11) are defined by dividing a whole space inside of the door (21) into the plurality of cavities.

3. The starting device according to claim 1, wherein the hollow body (11) is located in a bumper (61) of the vehicle.

4. The starting device according to claim 1, wherein the hollow body (11) is an impact beam (71) of the vehicle, and the plurality of cavities of the hollow body (11) are defined by dividing a space inside of the impact beam (71) into the plurality of cavities.

5. The starting device according to any one of claims 1 to 4, further comprising a G sensor (51) for detecting an acceleration, wherein the determination means (13) determines the collision based on the acceleration detected by the G sensor and the current speeds measured by the plurality of current speed measuring means.

6. The starting device according to any one of claims 1 to 5, wherein the current speed measuring means (12) includes a thermal current meter.

## Patentansprüche

1. Startvorrichtung einer Insassenschutzvorrichtung für ein Fahrzeug, aufweisend:
einen Hohlkörper (11), der eine Mehrzahl an Hohlräumen definiert, in denen eine Flüssigkeit existiert;
eine Mehrzahl an Momentangeschwindigkeitsmessmitteln (12), wobei jeder von der Mehrzahl an Hohlräumen ein Momentangeschwindigkeitsmessmittel (12) aufweist, dass derart angeordnet ist, dass es diesem Hohlraum des Hohlkörpers (11) ermöglicht, mit einem Raum außerhalb des Hohlkörpers (11) zu kommunizieren, wobei jedes von den Momentangeschwindigkeitsmessmitteln (12) eine momentane Geschwindigkeit der Flüssigkeit misst, wenn ein Differentialdruck zwischen dem entsprechenden Hohlraum des Hohlkörpers (11) und dem Raum außerhalb des Hohlkörpers (11) anliegt; und
ein Feststellungsmittel (13) zum Feststellen einer Kollision auf Basis der momentanen Geschwindigkeiten, die von der Mehrzahl an Momentangeschwindigkeitsmessmitteln (12) gemessen wird und zum Bestimmen einer Position der Kollision auf Basis der gemessenen momentanen Geschwindigkeiten.

2. Startvorrichtung nach Anspruch 1, wobei der Hohlkörper (11) eine Tür (21) des Fahrzeugs ist, und die Mehrzahl an Hohlräumen des Hohlkörpers (11) definiert wird, indem ein ganzer Raum in der Tür (21) in die Mehrzahl an Hohlräumen aufgeteilt wird.

3. Startvorrichtung nach Anspruch 1, wobei sich der Hohlkörper (11) in einer Stoßstange (61) des Fahrzeugs befindet.

4. Startvorrichtung nach Anspruch 1, wobei der Hohlkörper (11) ein Aufprallbalken (71) des Fahrzeugs ist und die Mehrzahl an Hohlräumen des Hohlkörpers (11) definiert wird, indem ein Raum in dem Aufprallbalken (71) in die Mehrzahl an Hohlräumen aufgeteilt wird.

5. Startvorrichtung nach einem der Ansprüche 1 bis 4, ferner aufweisend einen G-Sensor (51) zum Erfassen einer Beschleunigung, wobei das Feststellungsmittel (13) die Kollision auf Basis der von dem G-Sensor erfassten Beschleunigung und der von der Mehrzahl an Momentangeschwindigkeitsmessmitteln gemessenen momentanen Geschwindigkeiten feststellt.

6. Startvorrichtung nach einem der Ansprüche 1 bis 5, wobei das Momentangeschwindigkeitsmessmittel (12) einen Wärmeströmungsmesser beinhaltet.

## Revendications

1. Dispositif de démarrage d'un appareil de protection de passagers pour un véhicule, comprenant :
un corps creux (11) définissant une pluralité de cavités dans lesquelles existe un fluide ;
une pluralité de moyens de mesure de vitesse de courant (12), où chacune de la pluralité de cavités a un moyen de mesure de vitesse de courant (12) disposé de manière à permettre à cette cavité du corps creux (11) de communiquer avec un espace à l'extérieur du corps creux (11), chaque moyen de mesure de vitesse de courant (12) mesurant une vitesse de courant du fluide lorsqu'une différence de pression se produit entre la cavité correspondante du corps creux (11) et l'espace à l'extérieur du corps creux (11) ; et
un moyen de détermination (13) permettant de déterminer une collision sur la base des vitesses de courant mesurées par la pluralité de moyens de mesure de vitesse de courant (12) et de spécifier une position de la collision sur la base des vitesses de courant mesurées.

2. Dispositif de démarrage selon la revendication 1, dans lequel le corps creux (11) est une portière (21) du véhicule, et la pluralité de cavités du corps creux (11) sont définies en divisant un espace total à l'intérieur de la portière (21) en la pluralité de cavités.

3. Dispositif de démarrage selon la revendication 1, dans lequel le corps creux (11) est situé dans un pare-chocs (61) du véhicule.

4. Dispositif de démarrage selon la revendication 1, dans lequel le corps creux (11) est une poutre pare-chocs (71) du véhicule, et la pluralité de cavités du corps creux (11) sont définies en divisant un espace à l'intérieur de la poutre pare-chocs (71) en la pluralité de cavités.

5. Dispositif de démarrage selon l'une quelconque des revendications 1 à 4, comprenant en outre un capteur G (51) permettant de détecter une accélération, où le moyen de détermination (13) détermine la collision sur la base de l'accélération détectée par le détecteur G et les vitesses de courant mesurées par la pluralité de moyens de mesure de vitesse de courant.

6. Dispositif de démarrage selon l'une quelconque des revendications 1 à 5, dans lequel le moyen de mesure de vitesse de courant (12) comporte un ampèremètre thermique.
